# EUROPEAN PATENT APPLICATION

(11) **EP 1 160 648 A2**
(43) Date of publication of application: **05.12.2001**
(21) Application number: 01401388.2
(22) Date of filing: 28.05.2001
(51) Int. Cl.: G06F 1/00

(54) **Restriction method for utilization of computer file with use of biometrical information, method of logging in computer system and recording medium**

(30) Priority: 31.05.2000 JP 2000161932
(71) Applicant: Base Technology Inc., Tokyo 160-0023 (JP)
(72) Inventor: Yamane, Shigeaki, Shinjuku-ku, Tokyo (JP); Imajo, Tadahiro, Tokyo (JP); Yoshida, Naokuni, Tokyo (JP); Kan, Shigeru, Tokyo (JP)
(74) Representative: Rousset, Jean-Claude

(57) **Abstract**

When logging in a server via an information network, high security is ensured without using a password. When a terminal 2 accesses a server 3, a random key is sent from the server 3. An operator inputs a fingerprint from an individual identification input device, and the terminal 2 collates the fingerprint information with registered fingerprint information previously registered. If a match is obtained, the terminal 2 generates a log-in packet, and transmits the log-in packet to the server 3. If a match is not obtained, the log-in processing is suspended. The server 3 resolves the received log-in packet, takes out the registered fingerprint information, fingerprint information, and a user code, and collates the registered fingerprint information with fingerprint information. If a match is obtained, the server 3 collates the transmitted user code with a user code previously stored in the server 3. If a match is not obtained, the log-in processing is suspended. If a match is obtained, the server 3 permits log-in.

## Description

### TECHNICAL FIELD OF THE INVENTION

The present invention relates to a technique for preventing from unauthorized use of computer, and in particular to a technique that is effective in application to user authentication using biometrical data.

### BACKGROUND OF THE INVENTION

According to study conducted by the present inventors, it is found that when utilizing an information network such as the Internet the operator executes a log-in process as a start procedure of communication service and accesses a server of an Internet provider, which provides connection to the Internet.

In this log-in processing, the operator inputs information such as a password and a user name from a terminal (client) such as a computer. The server determines whether those kinds of information are correct. If correct, communication service is provided.

Furthermore, in recent years, as business increases in which use of terminals is required, the terminals stores therein a large amount of computer files requiring security, such as data and programs concerning secrets of companies.

In such a terminal storing computer files, utilization restriction is applied to those computer files and the computer files are protected thereby in some cases.

Furthermore, in a method generally known as an example of a technique for restricting utilization of a computer file, the user previously registers a password, a user name, and so on in a terminal. When using a computer file subjected to utilization restriction, the operator inputs the password and the user name. Those kinds of information is collated with the previously registered information. As a result, user authentication is conducted, and utilization restriction is canceled.

For example, such a data protection and illegality prevention function is described in detail in "Information Processing Handbook" edited by Information Processing Society of Japan and published by Ohmsha Ltd. on November 20, 1993, pp. 1265 to 1267. In this document, data protection and illegality prevention techniques in computer systems are described.

### SUMMARY OF THE INVENTION

However, the present inventors have found that there are the following problems in the log-in processing technique of communication service as described above.

Namely, a password is set as a security countermeasure but the password must be complicated if requiring for further enhancing the security. Therefore, password management of users, such as recitation and concealment of the password, becomes a burden.

Furthermore, in the log-in processing, the server conducts only collation of the password and the user name. Therefore, if the user name, password, or the like is known to a third person, there is a risk that a third person other than the user will impersonate the regular user and be logged in the server.

In addition, also in the case where utilization restriction is applied to a computer file stored in a terminal, only collation of the password and user name is conducted in the same way. Therefore, the password management becomes a burden. And there may be a risk that the password, user name, or the like will be known to a third party and the computer file will be used without authorization or falsified.

An object of the present invention is to provide a restriction method for utilization of computer file with use of biometrical information, a method of logging in a computer system, and a recording medium, capable of ensuring high security and certainly restricting the computer file use by a third party other than the authorized user without using a password when logging in a server via an information network.

A restriction method for utilization of computer file according to the present invention includes the steps of: storing first biometrical information previously in a computer, the first biometrical information identifying an arbitrary user individual and obtained from individual identification information input means; obtaining second biometrical information of an operator from the individual identification information input means when the operator uses the computer; collating the first biometrical information with the obtained second biometrical information, authenticating that the operator is the user if a match is obtained between the first biometrical information and the second biometrical information, and canceling utilization restriction of a computer file subjected to utilization restriction set therefor.

In a restriction method for utilization of computer file according to the present invention, each of the first biometrical information and the second biometrical information is fingerprint information.

In a restriction method for utilization of computer file according to the present invention, the computer file subjected to utilization restriction is at least one of a folder, data, and a program.

A recording medium according to the present invention has a program recorded thereon. The program causes execution of the steps of: collating first biometrical information with second biometrical information, the first biometrical information identifying an arbitrary user individual and being previously stored in a computer, the second biometrical information being obtained from an operator when using the computer; and authenticating that the operator is the user if a match is obtained between the first biometrical information and the second biometrical information, and canceling utilization restriction of a computer file subjected to utilization restriction set therefor.

A method for logging in a computer system according to the present invention includes the steps of: storing first biometrical information previously in a computer to be provided with communication service and previously in a computer system that provides the computer with communication service, the first biometrical information identifying an arbitrary user individual and being obtained from individual identification information input means; receiving in the computer a random key outputted from the computer system when the computer logs in the computer system; obtaining second biometrical information of an operator from the individual identification information input means when the operator uses the computer; collating the first biometrical information with the second biometrical information, authenticating that the operator is the user if a match is obtained between the first biometrical information and the second biometrical information, and encrypting the first biometrical information by using the received random key; generating a log-in packet having the encrypted first biometrical information and the second biometrical information, and transmitting the log-in packet to the computer system; and decrypting the first biometrical information of the received log-in packet, by the computer system collating the decrypted first biometrical information with the second biometrical information of the received log-in packet, authenticating that the operator is the user if a match is obtained between the first biometrical information and the second biometrical information of the log-in packet, and permitting the computer to log in the computer system.

In a method for logging in a computer system according to the present invention, each of the first biometrical information and the second biometrical information is fingerprint information.

A recording medium according to the present invention has a first program and a second program recorded thereon. When a computer to be provided with communication service logs in a computer system that provides the computer with communication service, the first program enables the computer system to execute the steps of: transmitting a random key to the computer; decrypting first biometrical information of a received log-in packet, and collating the decrypted first biometrical information with second biometrical information of the received log-in packet; and authenticating that an operator is a user if a match is obtained between the decrypted first biometrical information and second biometrical information of the received log-in packet, and permitting log in of the computer. The second program enables the computer to execute the steps of: collating previously stored first biometrical information with second biometrical information, the first biometrical information identifying an arbitrary user individual, the second biometrical information being obtained from an operator when using the computer; authenticating that the operator is the user if a match is obtained between the first biometrical information and the second biometrical information, and encrypting the first biometrical information by using the inputted random key; and generating a log-in packet having the encrypted first biometrical information and the second biometrical information, and transmitting the log-in packet to the computer system.

### BRIEF DESCRIPTIONS OF THE DRAWINGS

Fig. 1 is a diagram of a communication system according to an embodiment 1 of the present invention;
Fig. 2 is a flow chart in log-in processing of a communication system according to an embodiment 1 of the present invention;
Fig. 3A is a diagram of a log-in packet generated by a terminal according to an embodiment 1 of the present invention, Fig. 3B is a diagram of a log-in packet transmitted to a server, and Fig. 3C is a diagram of a log-in packet resolved by a server; and
Fig. 4 is a flow chart of log-in processing conducted by a terminal subjected to utilization restriction of a computer file by a file utilization restriction management program according to an embodiment 2 of the present invention.

### DESCRIPTION OF THE PREFERRED EMBODIMENTS

Hereafter, embodiments of the present invention will be described in detail by referring to drawings.

### (Embodiment 1)

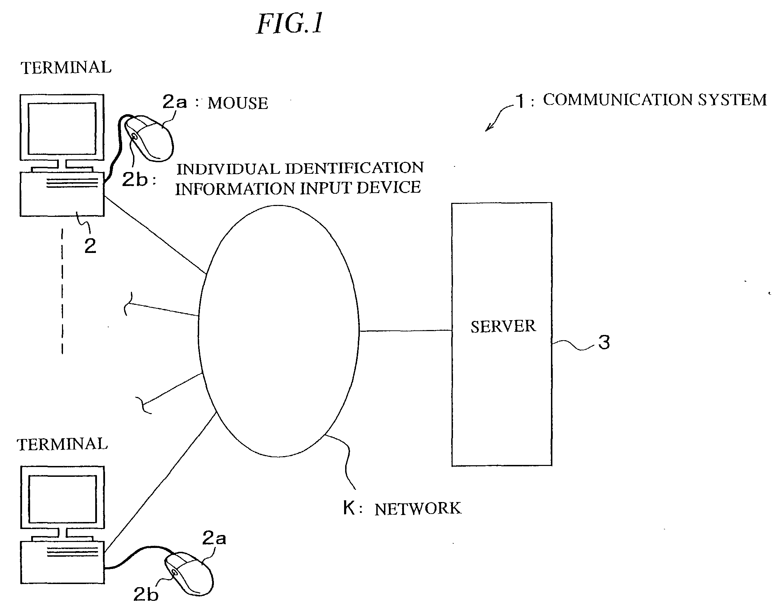

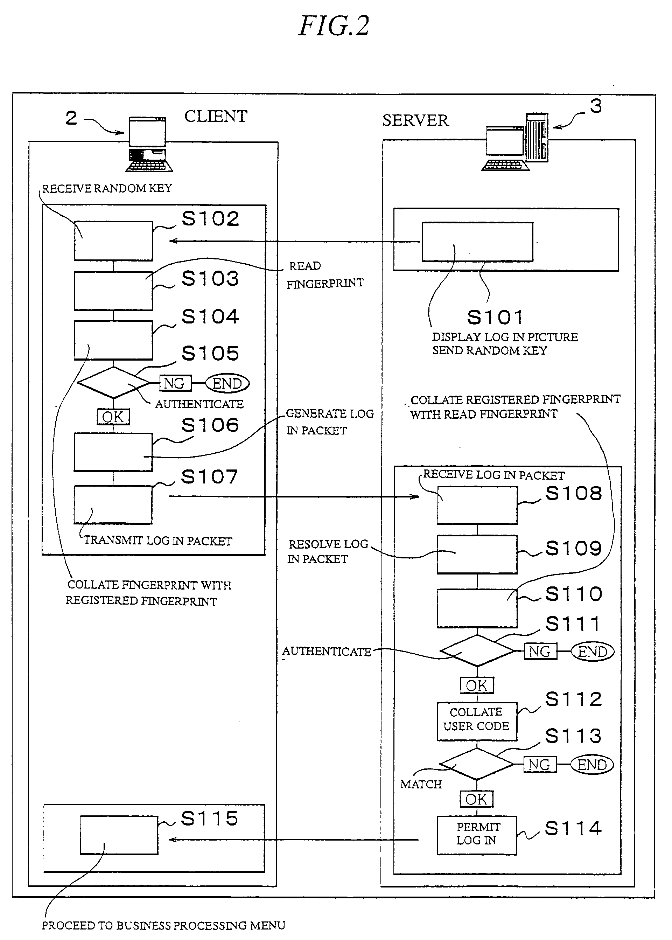

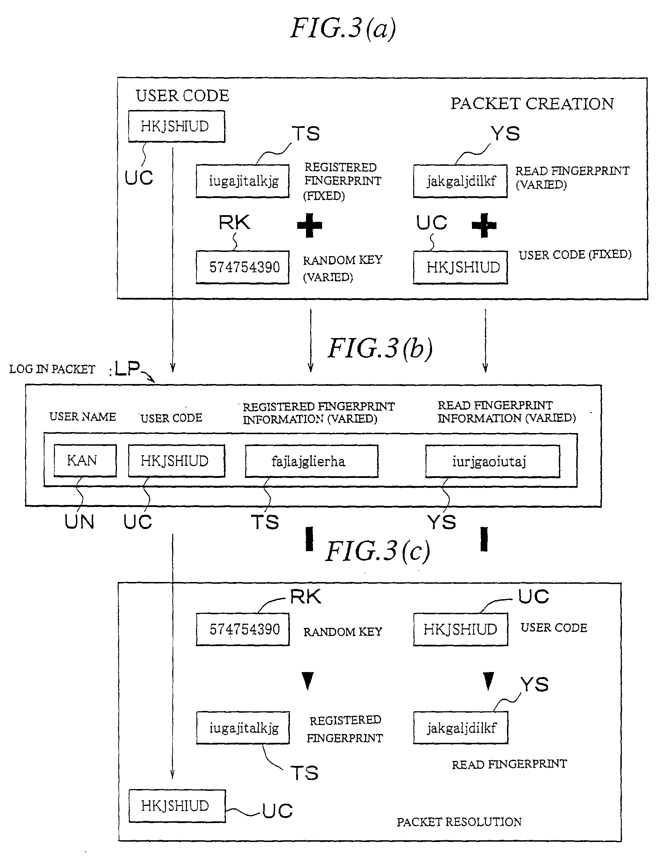

Fig. 1 is a diagram of a communication system according to an embodiment 1 of the present invention. Fig. 2 is a flow chart of log-in processing of a communication system according to an embodiment 1 of the present invention. Fig. 3A is a diagram of a log-in packet generated by a terminal according to an embodiment 1 of the present invention. Fig. 3B is a diagram of a log-in packet transmitted to a server. Fig. 3C is a diagram of a log-in packet resolved by a server.

In the present embodiment 1, a communication system 1 includes a plurality of terminals (computers) 2 and a server (computer system) 3. Each of the terminals 2 is a work station, a personal computer, or the like, and is connected to the server 3 via network K, such as a telephone network, a private network, or a computer network, i.e., the so-called Internet.

Furthermore, the terminal 2 includes a mouse 2a, which is a kind of an input/output device. This mouse 2a includes an individual identification information input device (individual identification information input means) 2b. The individual identification information input device 2b is adopted to obtain fingerprint information (biometrical information) YS.

The individual identification information input device 2b may be provided not in the mouse 2a, but in a display section or a keyboard of the terminal 2. Or the individual identification information input device 2b may also be provided independently of them.

In the terminal 2, a storage device (recording medium) is provided. In this storage device, there are stored an Internet communication program such as WWW (World Wide Web) browser for accessing the server 3 and browsing home pages; registered fingerprint information (biometrical information) TS for identification, which was previously registered; a user code UC; and an authentication information management program (second program).

Here, the case where fingerprint information is used as individual recognition information will be described. Besides, there are considered a face shape, an ear shape, a retinal pattern, a voiceprint, and a holograph as the individual recognition information (biometrical information).

The terminal 2 is connected to the server 3 via the network K, and is provided with communication service. The server 3 unitarily manages and provides information requested by the server 2.

Furthermore, also in the storage device (recording medium) provided in the server 3, an authentication information management program (first program) is stored in the same way. This authentication information management program is software for determining whether the operator of the terminal 2 is a regular user on the basis of fingerprint collation to conduct authentication. Only in the case that a match is obtained, the authentication information management program permits logging in the server 3.

The log-in processing of the communication system 1 in the present embodiment 1 will now be described by referring to Fig. 1, a flow chart of Fig. 2, and diagrams of a log-in packet LP of Figs. 3A to 3C.

First, the operator starts the Internet communication program installed in the terminal 2, and accesses the server 3. If the terminal 2 is connected to the server 3 by the Internet communication program, then data of a log-in page and a random key RK are sent from the server 3 (step S101). The terminal 2 receives the random key RK, and the log-in page is displayed on a display section (step S102).

And the operator inputs fingerprint information YS of the operator himself or herself by using the individual identification information input device 2b provided in the mouse 2a (step S103). The terminal 2 collates the fingerprint information YS with the registered fingerprint information TS, which was previously registered (step S104), and determines whether a match is obtained between those two data (step S105).

If the fingerprint information YS is matched with the registered fingerprint information TS in the processing of the step S105, then the terminal 2 generates a log-in packet LP (step S106), and transmits the log-in packet LP to the server 3 (step S107). If the fingerprint information YS is not matched with the registered fingerprint information TS, which was previously registered, in the processing of the step S105, then authentication is not obtained and the log-in processing is suspended.

Generation of the log-in packet LP will now be described.

As shown in Fig. 3A, the terminal 2 collates finger print information YS, which has been read, with the registered fingerprint information TS, which was previously registered. Only at the time of information matched, the terminal 2 takes out a user code UC from the storage device of the terminal 2.

And the terminal 2 encrypts the registered fingerprint information TS on the basis of the random key RK received in the processing of the step S101 when the terminal 2 logged in the server 3. In addition, the terminal 2 encrypts the fingerprint information YS as well by combining the user code UC therewith, generates the log-in packet LP, and transmits the log-in packet LP to the server 3.

As shown in Fig. 3B, the log-in packet LP is formed of a user name UN, the user code UC, encrypted registered fingerprint information TS, and the fingerprint information YS combined with the user code UC.

Since the registered fingerprint information TS is encrypted by the random key RK, the registered fingerprint information TS always becomes different information when it is transmitted to the server 3 as the log-in packet LP. On the other hand, the fingerprint information YS becomes different information each time it is read, because of a difference in angle and position of a finger. Therefore, the fingerprint information YS also becomes different information, when it is transmitted to the server 3 as the log-in packet LP.

Furthermore, the user code UC is information obtained from the storage device of the terminal 2 only when the fingerprint information YS is matched with the registered fingerprint information TS. The user code UC is previously stored in the server 3 as well.

If the server 3 receives the log-in packet LP (step S108), then the server resolves the log-in packet LP (step S109). In the processing of the step S109, the log-in packet LP is resolved into the registered fingerprint information TS decrypted by using the random key RK transmitted to the terminal 2, into the fingerprint information YS obtained from the user code UC, and into the user code.

And the server 3 collates the decrypted registered fingerprint information TS with the fingerprint information YS obtained from the user code UC (step S110), and thereby determines whether the decrypted registered fingerprint information TS is matched with the fingerprint information YS obtained from the user code UC (step S111).

If the fingerprint information YS is matched with the registered fingerprint information TS in the processing of the step S111, then the server 3 collates the user code UC transmitted from the terminal 2 with the user code UC previously stored in the server 3 (step S112) and determines whether a match is obtained between these two user codes UC (step S113).

If the two user codes UC are not matched with each other in the processing of the step S113, then authentication is not obtained and the log-in processing is suspended. If the two user codes UC are matched with each other in the processing of the step S113, then the server 3 authenticates that the operator is the user himself or herself, and permits log in (step S114), and the user of the terminal 2 is provided with desired service (step S115).

The log-in packet LP is not transmitted to the server 3 in the present embodiment 1, unless the registered fingerprint information TS previously registered in the terminal 2 is matched with the fingerprint information YS inputted from the individual identification information input device 2b when utilizing the terminal 2 and thereby fingerprint authentication is obtained. Therefore, it is possible to positively prevent a person who uses the user code UC without authorization from impersonating the authorized user.

Furthermore, since the fingerprint information YS and the registered fingerprint information included in the log-in packet LP transmitted to the server 3 are changed whenever they are transmitted, falsification, unauthorized acquisition, and unauthorized use of the log-in packet LP can be made impossible.

Furthermore, since the password of the user can be made unnecessary, the burden of the user and the manager who manages the password can be eliminated.

### (Embodiment 2)

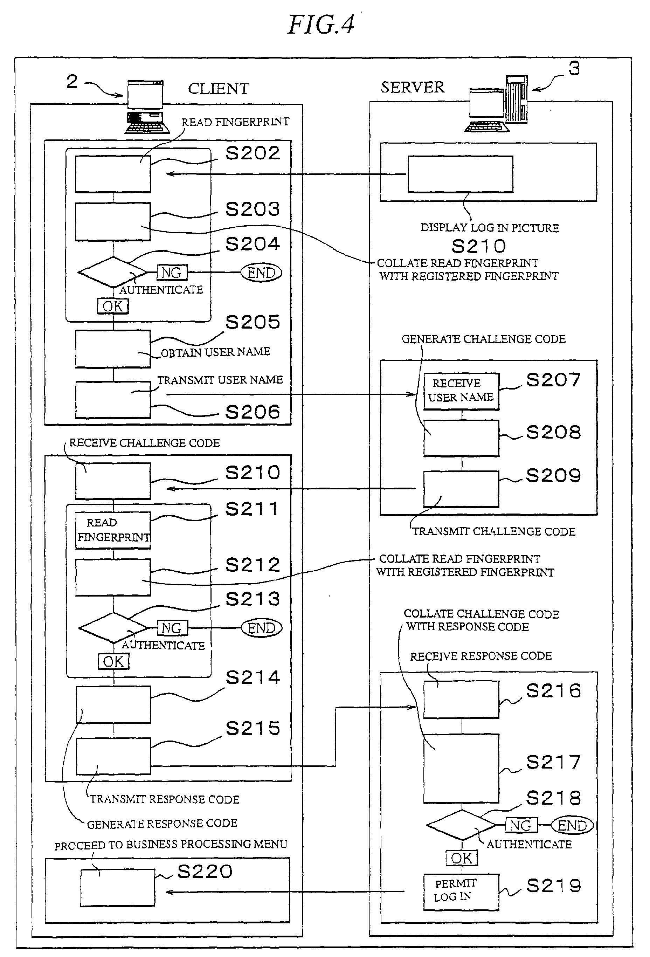

Fig. 4 is a flow chart of log-in processing conducted by a terminal subjected to utilization restriction of a computer file by a file utilization restriction management program according to an embodiment 2 of the present invention.

In the present embodiment 2, a communication system 1 (Fig. 1) includes a plurality of terminals 2 and a server 3, in the same way as the above described embodiment 1. The terminals 2 are connected to the server 3 via network K.

In a storage device of the terminal 2, there is stored a file utilization restriction management program besides an Internet communication program such as WWW browser, registered fingerprint information TS for identification which is previously registered, and a user name.

The file utilization restriction management program is a program for restricting the utilization of a preset computer file, such as a folder, data, or a program, stored in, for example, a storage device of the terminal 2. Therefore, any one of the pertinent folder, data, or program is subjected to the utilization restriction by the file utilization restriction management program.

In the terminal 2 as well, there is provided a mouse 2a including an individual identification information input device 2b, in the same way as the above described embodiment 1. The individual identification information input device 2b is adopted to obtain fingerprint information YS of the user.

In the embodiment 2 as well, the individual identification information input device 2b may be provided not in the mouse 2a, but in a display section or a keyboard of the terminal 2. Or the individual identification information input device 2b may also be provided independently of them. Furthermore, the individual recognition information for authenticating the user may be a face shape, an ear shape, a retinal pattern, a voiceprint, or a holograph, instead of fingerprint information.

A user authentication technique using the file utilization restriction management program stored in the terminal 2 will now be described.

As an example, the case where a user name stored in the terminal 2, and a password for utilizing a token, which is software for creating a response code, are subjected to utilization restriction will now be described.

Furthermore, it is assumed that in the case where the server 2 is permitted to log in the server 3 a one-time password is used in order to avoid the risk that log-in information (user name) is stolen or used without authorization.

First, the operator starts the Internet communication program installed in the terminal 2 to access the server 3. The terminal 2 is connected to the server 3 by the Internet communication program, and then data of a log-in page is sent from the server 3 (step S201), and the log-in page is displayed on a display section of the terminal 2.

The operator inputs fingerprint information YS of the operator himself or herself by using the individual identification information input device 2b (step S202).
The terminal 2 collates the fingerprint information YS with the registered fingerprint information TS, which was previously registered, (step S203), and determines whether a match is obtained between those two information pieces (step S204).

If the two fingerprint information pieces are marched with each other, then utilization restriction of the user name is canceled, and the user name is obtained from the storage device of the terminal 2 (step S205). If the two fingerprint information pieces are not matched with each other in the processing of the step S104, then the log-in processing is suspended.

Only in the case where the user is authenticated by using the fingerprint information, it becomes possible for the terminal 2 to read out the user name. As a result, unauthorized use of the user name caused by theft or the like can be prevented.

The obtained user name is transmitted to the server 3 (step S206). If the server 3 receives the user name (step S207), the server 3 then generates a challenge code to be used in the one time password (step S208). The challenge code is generated by the server 3 each time log-in is conducted.

The generated challenge code is transmitted to the terminal 2 (step S209). The challenge code is received by the terminal 2 (step S210).

In order to conduct the user authentication again, the fingerprint information YS is to be obtained in the terminal 2 by the individual identification input device 2b (step S211), and collates the fingerprint information YS with the registered fingerprint information TS (step S212).

In the processing of the step S212, it is determined whether a match is obtained between those two pieces of fingerprint information (step S213). If the two pieces of fingerprint information are matched with each other, then a password for utilizing the token, i.e., the so-called PIN code is obtained from the storage device of the terminal 2. Furthermore, if the two pieces of fingerprint information are not matched with each other, the log-in processing is then suspended.

By the processing of the steps S211 to S214, the utilization restriction of the token is canceled. Furthermore, in this case as well, it becomes possible for the terminal 2 to read out the PIN code, only when the user is authenticated on the basis of the fingerprint information. Therefore, it is possible to prevent unauthorized utilization of the token by a leakage or the like of the PIN code.

The terminal 2 is adopted to obtain the token on the basis of the obtained PIN code, and generates a response code by utilizing the token (step S214). The terminal 2 returns the generated response code to the server 3 (step S215).

The server 3 conducts collation of the received response code and challenge code (steps S216 and S217), and determines whether a match is obtained between those codes (step S218).

If the codes are matched in the processing of the step S218, then the server 3 authenticates that the operator is the user himself or herself and permits log in (step S219), and the user of the terminal 2 is provided with desired service (step S220). If the codes are not matched, the server 3 then suspends the log-in processing.

The pertinent computer file is made unusable, unless the registered fingerprint information TS, which was previously registered, is matched with the fingerprint information YS inputted from the individual identification information input device 2b when utilizing the terminal 2. Therefore, it is possible to positively prevent unauthorized use of the computer file.

Furthermore, since the password of the user can be made unnecessary, the burden of the user and the manager who manages the password can be eliminated.

The present invention is not limited to the above described embodiments. It is a matter of course that various changes can be made without departing from the spirit and scope of the present invention.

The present invention brings about the following advantages:
(1) According to the present invention, the pertinent computer file is made unusable, unless previously registered first biometrical information coincides with second biometrical information inputted at the time of utilization, when utilizing a computer file having utilization restriction set therefor. Therefore, it is possible to positively prevent unauthorized use of the computer file;
(2) Unless first biometrical information previously registered in a computer is matched with second biometrical information inputted at the time of utilization of the computer and thereby biometrical authentication is obtained, a log-in packet is not transmitted to a computer system, in the present invention. Therefore, it is possible to prevent a person who impersonates the user from logging in the computer system;
(3) Since first biometrical information included in the log-in packet transmitted to the computer system is changed whenever it is transmitted, falsification, unauthorized acquisition, and unauthorized use of the log-in packet can be made impossible in the present invention; and
(4) Furthermore, according to the present invention, password management becomes unnecessary, and the burden of the password manager can be eliminated.

## Claims

1. A restriction method for utilization of computer file, comprising the steps of:
storing first biometrical information previously in a computer, said first biometrical information identifying an arbitrary user individual and obtained from individual identification information input means;
obtaining second biometrical information of an operator from said individual identification information input means when the operator uses said computer;
collating said first biometrical information with the obtained second biometrical information, authenticating that the operator is the user if a match is obtained between said first biometrical information and said second biometrical information, and canceling utilization restriction of a computer file subjected to utilization restriction set therefor.

2. A restriction method for utilization of computer file according to claim 1, wherein each of said first biometrical information and said second biometrical information is fingerprint information.

3. A restriction method for utilization of computer file according to claim 2, wherein said computer file subjected to utilization restriction is at least any one of a folder, data, and a program.

4. A restriction method for utilization of computer file according to claim 1, wherein said computer file subjected to utilization restriction is at least any one of a folder, data, and a program.

5. A recording medium having a program recorded thereon, said program causing execution of the steps of:
collating first biometrical information with second biometrical information, said first biometrical information identifying an arbitrary user individual and being previously stored in a computer, said second biometrical information being obtained from an operator when using said computer; and
authenticating that the operator is the user if a match is obtained between said first biometrical information and said second biometrical information, and canceling utilization restriction of a computer file subjected to utilization restriction set therefor.

6. A method for logging in a computer system, comprising the steps of:
storing first biometrical information previously in a computer to be provided with communication service and previously in a computer system that provides said computer with communication service, said first biometrical information identifying an arbitrary user individual and being obtained from individual identification information input means;
receiving in said computer a random key outputted from said computer system when said computer logs in said computer system;
obtaining second biometrical information of an operator from said individual identification information input means when the operator uses said computer;
collating said first biometrical information with said second biometrical information, authenticating that the operator is the user if a match is obtained between said first biometrical information and said second biometrical information, and encrypting said first biometrical information by using said received random key;
generating a log-in packet having said encrypted first biometrical information and said second biometrical information, and transmitting said log-in packet to said computer system; and
decrypting said first biometrical information of said received log-in packet by said computer system, collating said decrypted first biometrical information with said second biometrical information of said received log-in packet, authenticating that the operator is the user if a match is obtained between said first biometrical information and said second biometrical information of said log-in packet, and permitting said computer to log in said computer system.

7. A method for logging in a computer system according to claim 6, wherein each of said first biometrical information and said second biometrical information is fingerprint information.

8. A recording medium having a first program and a second program recorded thereon,
when a computer to be provided with communication service logs in a computer system that provides said computer with communication service, said first program enabling said computer system to execute the steps of:
transmitting a random key to said computer;
decrypting first biometrical information of a received log-in packet, and collating said decrypted first biometrical information with second biometrical information of said received log-in packet; and
authenticating that an operator is a user if a match is obtained between said decrypted first biometrical information and second biometrical information of said received log-in packet, and permitting log-in of said computer; and
said second program enabling said computer to execute the steps of:
collating previously stored first biometrical information with second biometrical information, said first biometrical information identifying an arbitrary user individual, said second biometrical information being obtained from an operator when using said computer;
authenticating that the operator is the user if a match is obtained between said first biometrical information and said second biometrical information, and encrypting said first biometrical information by using said inputted random key; and
generating a log-in packet having said encrypted first biometrical information and said second biometrical information, and transmitting said log-in packet to said computer system.
